**Europäisches Patentamt**

**European Patent Office**

**Office européen des brevets**

(19)

(11) Veröffentlichungsnummer: **0 039 841**
**B1**

(12) **EUROPÄISCHE PATENTSCHRIFT**

(45) Veröffentlichungstag der Patentschrift:
**27.07.83**

(51) Int. Cl.³: **C 09 K 3/22, C 09 B 67/00**

(21) Anmeldenummer: **81103260.6**

(22) Anmeldetag: **30.04.81**

(54) Verfahren zur Herstellung von staubarmen Präparationen.

(30) Priorität: **10.05.80 DE 3018029**

(43) Veröffentlichungstag der Anmeldung:
**18.11.81 Patentblatt 81/46**

(45) Bekanntmachung des Hinweises auf die Patenterteilung:
**27.07.83 Patentblatt 83/30**

(84) Benannte Vertragsstaaten:
**CH DE FR GB IT LI**

(56) Entgegenhaltungen:
**BE-A-414 902**
**DE-A-1 134 467**
**DE-A-2 546 298**
**Römpp Chemie-Lexikon (1950), Seite 1144**

(73) Patentinhaber: **BAYER AG, Zentralbereich Patente, Marken und Lizenzen, D-5090 Leverkusen 1, Bayerwerk (DE)**

(72) Erfinder: **Lahrs, Jürgen, Dr., Volberger Weg 11, D-5000 Köln 91 (DE)**
Erfinder: **Schubert, Klaus, Morgengraben 1, D-5000 Köln 80 (DE)**
Erfinder: **Gösling, Claus, Feldstrasse 68, D-5090 Leverkusen 3 (DE)**
Erfinder: **Jovcic, Dorde, Am Büscherhof 14, D-5653 Leichlingen (DE)**
Erfinder: **Gleinig, Harald, Dr., Eichholzer Weg 100, D-5068 Odenthal (DE)**
Erfinder: **Skerhut, Reiner, Gronauer Strasse 34, D-5000 Köln 80 (DE)**

Verfahren zur Herstellung von staubarmen Präparationen

Gegenstand der Erfindung ist ein Verfahren zur Herstellung von staubarmen bzw. nicht staubenden pulverförmigen oder granulierten Präparationen, beispielsweise Farbstoffpräparationen.

Bei der Verarbeitung von pulverförmigen oder granulierten Stoffen tritt sehr häufig eine unangenehme Staubentwicklung auf. Um diesen lästigen Effekt zu beseitigen, werden den Pulvern bzw. Granulaten häufig Entstaubungsmittel zugesetzt. Dieses erfolgt beispielsweise entweder durch direktes Besprühen des pulverförmigen Produktes, beispielsweise in einem Schleudermischer (vgl. DE-A-1 816 984), oder durch Zumischen dieser Hilfsmittel zur wäßrigen Lösung oder Dispersion des zu pulverisierenden Produktes vor dem eigentlichen Trocknungsprozeß (vgl. z. B. DE-A-2 654 408).

Die bekannten Entstaubungsmethoden weisen jedoch verschiedene Nachteile auf.

So kommt es bei der direkten Besprühung des zu entstaubenden Produktes, wie es beispielsweise auch in BE-A-414 902 beschrieben wird, aufgrund der stets im Sprühnebel vorhandenen größeren Flüssigkeitstropfen zu Produktagglomerationen, die bei der Weiterverarbeitung bzw. der direkten Verwendung der pulverförmigen Präparate zu unerwünschten Effekten führen (z. B. »Nesterbildung« beim Verdrucken von Farbstoffpulvern) oder aber zu Anbackungen an den Apparate- bzw. Gefäßwänden.

Beim Zumischen der Entstaubungsmittel zu wäßrigen Produktanschlämmungen beobachtet man andererseits insbesondere beim längeren Lagern eine Aufrahmung dieser Hilfsmittel, die sich dann an Wänden und Decken der Vorratsbehälter absetzen und sich somit ihrer eigentlichen Funktionsausübung im pulverisierten Präparat entziehen. Besonders nachteilig ist bei dieser Arbeitsweise die relativ große Einsatzmenge an diesen Mitteln, die gleichmäßig im Produkt (also auch im Produktinneren) verteilt sind, während nur der an der Oberfläche befindliche Teil dieser Hilfsstoffe wirksam werden kann. Dieser unerwünschte Effekt kann zwar nach dem Verfahren gemäß EP-A-0 015 464 weitgehend vermieden werden, jedoch werden auch hierbei noch verhältnismäßig große Mengen an den zugesetzten Hilfsmitteln benötigt.

Es wurde nun gefunden, daß man die genannten Nachteile weitgehend vermeiden kann, wenn man das zu entstaubende Produkt mit einem Aerosol eines Entstaubungsmittels behandelt, wobei das Aerosol eine mittlere Teilchengröße von weniger als 10 μ aufweist und man die Entstaubung unmittelbar im Anschluß an eine Trocknung derart vornimmt, daß man das Aerosol in den freien Fall des zu entstaubenden Produktes in einer Entstaubungskammer einleitet.

Die Herstellung der Aerosole erfolgt in an sich bekannter Weise (vgl. z. B. DE-A-1 571 773), indem man die gegebenenfalls in einem Lösungsmittel gelösten oder dispergierten Entstaubungsmittel versprüht oder durch Ultraschall zerstäubt und anschließend die dabei entstehenden größeren Flüssigkeitstropfen durch Zentrifugieren (beispielsweise in einem Cyclon), Filtrieren durch geeignete Filter oder einfach durch Ausnutzung der Schwerkraft in einer Abscheidekammer abtrennt.

Die erfindungsgemäß zu verwendenden Aerosole unterscheiden sich somit rein qualitativ von den bislang zur Anwendung gelangten Sprühnebeln dadurch, daß praktisch die gesamten Flüssigkeitströpfchen nicht durch die Schwerkraft absinken.

Da die Aerosole im gleichen Rauminhalt eine wesentlich größere Oberfläche besitzen als die herkömmlichen Spraynebel mit größeren Teilchendurchmessern, haben sie auch einen deutlich verbesserten Wirkungsgrad, was ein weiterer Vorteil des erfindungsgemäßen Verfahrens ist.

Im allgemeinen reichen für 100 Teile Pulver Kontaktzeiten von 1 sec bis 10 min aus. Im übrigen hängen die Kontaktzeiten und die Menge des einzusetzenden Aerosols naturgemäß von der Beschaffenheit des zu entstaubenden Produktes, der Wirksamkeit der Entstaubungsmittel sowie der apparativen Gegebenheiten des Trocknungsaggregates, in dem das pulverisierte Material anfällt, ab.

Die Menge der Entstaubungsmittel kann deshalb innerhalb größerer Intervalle schwanken. Durchschnittlich wird das zu entstaubende Gut mit 0,01–4%, vorzugsweise 0,1–1%, mit Entstaubungsmittel belegt.

Geeignete Entstaubungsmittel sind handelsübliche Produkte, deren Zusammensetzung von der Art des zu entstaubenden Materials abhängt.

Für die bevorzugt zu entstaubenden Farbstoffpulver kommen beispielsweise folgende Stoffklassen in Betracht: Cyclische Kohlenwasserstoffe, wie Decalin und Tetralin, Phthalsäuredialkylester sowie insbesondere Mineralöle, die zum Teil ansulfiert sein können, mit einem Siedebereich von 130 bis 300° C bzw. Mischungen dieser Stoffe mit vorzugsweise nichtionogenen Emulgatoren.

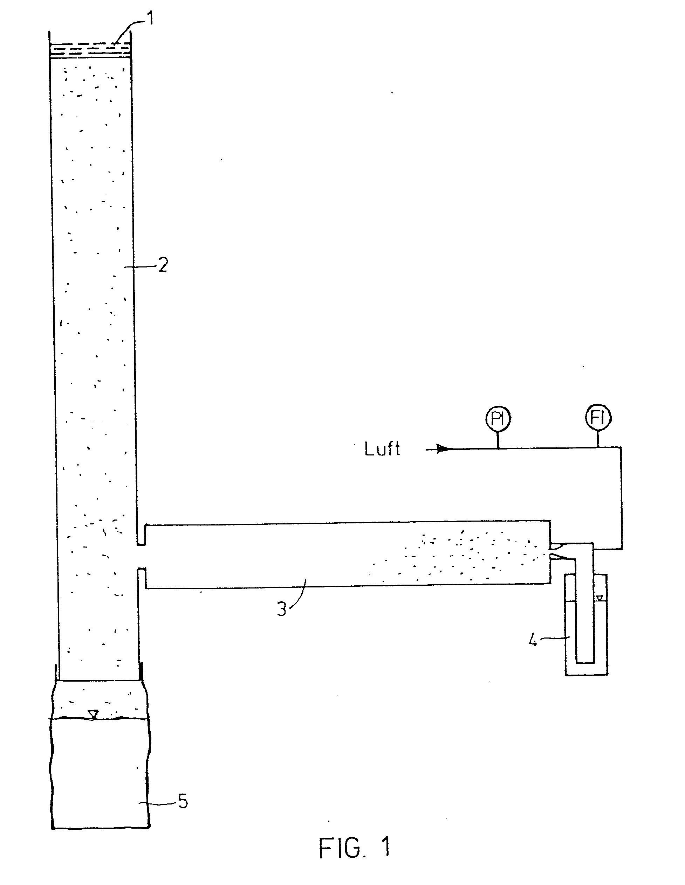

Bei der praktischen Durchführung des Verfahrens geht man beispielsweise so vor, daß man das am unteren Ende eines Sprühtrockners anfallende pulverisierte Produkt über ein Rüttelsieb (1) (vgl. Fig. 1) in eine senkrecht stehende Entstaubungskammer (2) einträgt und in den freien Fall des Pulvers das in der Aerosolkammer (3) mittels der Düse (4) erzeugte Aerosol einleitet. Das am Ende der Entstaubungskammer (5) anfallende Produkt ist praktisch staubfrei und kann unmittelbar versandt bzw. weiterverarbeitet werden.

Das neue Verfahren eignet sich grundsätzlich zur Entstaubung sämtlicher zum Stauben neigenden Produkte, wie z. B. Waschpulver, Schädlingsbekämpfungsmittel, Nahrungsmittel (z. B. Milch-, Kaffee-Pulver, Mehl) sowie insbesondere Pigmente und Farbstoffe. Bei der Behandlung von Nahrungsmitteln müssen selbstverständlich besondere, physiologisch unbedenkliche Staubbindemittel eingesetzt werden.

Das neue Verfahren sei anhand der folgenden Beispiele näher erläutert.

Unter »Prozenten« sind im Rahmen dieser Erfindung Gewichtsprozente zu verstehen.

### Beispiel 1

Das in einem Sprühtrockner erzeugte Pulver von Acid Black 172 mit einem Staubwert von 34+4 und Teilchengrößen zwischen 50 und 150 μ wird kontinuierlich auf das Rüttelsieb gemäß Fig. 1 aufgetragen, von wo es in die mit einem Aerosol eines handelsüblichen Entstaubungsmittels auf Mineralöl-Basis durchströmte Entstaubungskammer fällt. Der Aerosolstrom wird so dosiert, daß das die Entstaubungskammer verlassende Produkt mit ca. 0,25% Entstaubungsmittel beladen ist. Das anfallende Produkt zeigt einen Staubwert von 0.

Bei der herkömmlichen Arbeitsweise durch direkte Besprühung mit der 5- bis 10fachen Menge Entstaubungsmittel wird demgegenüber nur ein Staubwert von 10+0 erhalten.

Die vorstehend erwähnten Staubwerte wurden mit Hilfe des Cassella-Staubmeßgerätes (vgl. Textilveredlung 9 [1974], S. 102) bestimmt.

### Beispiel 2

Das in einem Sprühtrockner erzeugte Granulat von ACID-Black 60 mit einem Staubwert von 7+10 und einer mittleren Teilchengröße von 100 μ wird wie in Beispiel 1 mit 0,15% Staubbindemittel belegt.

Das anfallende Granulat zeigt einen Staubwert von 0.

### Beispiel 3

Das in einem Sprühtrockner erzeugte Granulat von VAT Yellow 12 (65 405) mit einem Staubwert 8+0 und einer mittleren Teilchengröße von 180 μ wird wie in Beispiel 1 mit einem Aerosol eines handelsüblichen Entstaubungsmittels auf z. B. Mineralöl-Basis entstaubt. Der Aerosolstrom wird so dosiert, daß das die Entstaubungskammer verlassende Produkt mit 0,2% Entstaubungsmittel beladen ist. Das anfallende noch rieselfähige Produkt zeigt einen Staubwert von 0.

### Beispiel 4

Das in einem Tellertrockner getrocknete Granulat von Vulkacit CZ/MG mit einem Staubwert von 8+0 und einer mittleren Teilchengröße von 50 μ wird mit einem Aerosol eines Paraffinöles wie in Beispiel 1 entstaubt. Der Aerosolstrom wird so dosiert, daß das die Entstaubungskammer verlassende Produkt mit 0,8% Entstaubungsmittel beladen ist. Das anfallende noch rieselfähige Produkt zeigt einen Staubwert von 2+0.

Die vorstehend genannten Warenzeichen werden von der Anmelderin als solche anerkannt.

### Patentansprüche

1. Verfahren zur Herstellung von staubarmen bzw. nicht staubenden pulverförmigen bzw. granulierten Präparationen durch Behandlung des zu entstaubenden Produktes mit einem Aerosol eines Entstaubungsmittels, dadurch gekennzeichnet, daß das Aerosol eine mittlere Teilchengröße von weniger als 10 μ aufweist und man die Entstaubung unmittelbar im Anschluß an eine Trocknung derart vornimmt, daß man das Aerosol in den freien Fall des zu entstaubenden Produktes in einer Entstaubungskammer einleitet.

2. Verfahren gemäß Anspruch 1, dadurch gekennzeichnet, daß Farbstoffpulver oder -granulate entstaubt werden.

### Claims

1. Process for the manufacture of pulverulent or granular preparations which have a low dust content or are non-dusting, in which the product to be dustproofed is treated with an aerosol or a dustproofing agent, characterised in that the aerosol has a mean particle size of less than 10 μ, and the dustproofing is carried out immediately after a drying operation, in such manner that the aerosol is introduced into the path of the free-falling powder, in a dustproofing chamber.

2. Process according to Claim 1, characterised in that dyestuff powders or dyestuff granules are dustproofed.

### Revendications

1. Procédé de production de préparations en poudres ou en grains dégageant peu de poussière ou ne dégageant pas de poussière, par traitement du produit à dépoussiérer avec un aérosol d'un agent de dépoussiérage, caractérisé en ce que l'aérosol présente une grosseur moyenne de particules de moins de 10 μm et on effectue le dépoussiérage immédiatement après un séchage en envoyant l'aérosol dans la chute libre du produit à dépoussiérer dans une chambre de dépoussiérage.

2. Procédé suivant la revendication 1, caractérisé en ce qu'on dépoussière des poudres ou des granulés de colorant.

FIG. 1